# EUROPEAN PATENT APPLICATION

(11) **EP 4 832 108 A2**
(43) Date of publication of application: **28.10.2026**
(21) Application number: 26172912.3
(22) Date of filing: 16.04.2026
(51) Int. Cl.: H01M 4/525, C01G 53/42, H01M 4/36, H01M 10/0525, H01M 4/02

(54) **POSITIVE ELECTRODE ACTIVE MATERIALS, RECHARGEABLE LITHIUM BATTERIES INCLUDING POSITIVE ELECTRODE ACTIVE MATERIALS, AND METHODS OF PREPARING POSITIVE ELECTRODE ACTIVE MATERIALS**

(30) Priority: 24.04.2025 KR 20250054121
(71) Applicant: SAMSUNG SDI CO., LTD., Yongin-si, Gyeonggi-do 17084 (KR)
(72) Inventor: LEE, Changjin, 17084 Yongin-si (KR); KWON, Seonyoung, 17084 Yongin-si (KR); CHAE, Youngjoo, 17084 Yongin-si (KR); SHIN, Dongwook, 17084 Yongin-si (KR); CHOI, Seungyeon, 17084 Yongin-si (KR); HAN, Jihyun, 17084 Yongin-si (KR); PARK, Soojeong, 17084 Yongin-si (KR); KIM, Young-Ki, 17084 Yongin-si (KR)
(74) Representative: Maiwald GmbH

(57) **Abstract**

A method of preparing a positive electrode active material may include preparing core particles including a lithium nickel-based composite oxide, mixing the core particles with a lithium hydroxide aqueous solution having a molar concentration from about 0.1 M to about 2.0 M, washing the core particles, drying the core particles to prepare a dried product, and mixing and heat-treating the dried product with a cobalt raw material to form a coating layer on a surface of the dried product to obtain the positive electrode active material. A positive electrode active material thereof may include core particles including a lithium nickel-based composite oxide and coating layers disposed on surfaces of the core particles, with the coating layers having a cobalt amount of about 10 at% to about 40 at% based on 100 at% of total metals in the positive electrode active material, excluding lithium.

## Description

### BACKGROUND

### 1. Field

The present disclosure relates to positive electrode active materials, methods of preparing the positive electrode active materials, and rechargeable lithium batteries including the positive electrode active materials.

### 2. Description of the Related Art

A portable information device (such as a cell phone, a laptop, or a smart phone) or an electric vehicle has used a rechargeable lithium battery having high energy density and easy portability as a driving power source. Recently, research has been actively conducted to use a rechargeable lithium battery with high energy density as a driving power source or power storage source for hybrid or electric vehicles.

Various positive electrode active materials have been investigated for the above-described aims. Among them, lithium nickel-based oxide, lithium nickel manganese cobalt composite oxide, lithium nickel cobalt aluminum composite oxide, and lithium cobalt oxide are mainly used as positive electrode active materials. With a recent rapidly increasing demand for large-sized, high-capacity, or high-energy-density rechargeable lithium batteries, there is a need to develop positive electrode active materials that simultaneously improve stability and improve performance of a rechargeable lithium battery.

### SUMMARY

A method of preparing a positive electrode active material according to the present disclosure may include preparing core particles including a lithium nickel-based composite oxide, mixing the core particles with a lithium hydroxide aqueous solution having a molar concentration from about 0.1 M to about 2.0 M, washing the core particles, drying the core particles to prepare a dried product, and mixing and heat-treating the dried product with a cobalt raw material to form a coating layer on a surface of the dried product to obtain the positive electrode active material.

In some embodiments, the lithium nickel-based composite oxide may be represented by:

Liₐ₂Niₓ₂M³_{y2}M⁴_{z2}O_{2-b2}X_{b2}.

0.9≤a2≤1.8, 0.3≤x2≤1, 0≤y2≤0.7, 0≤z2≤0.7, 0.9≤x2+y2+z2≤1.1, and 0≤b2≤0.1. M³ and M⁴ may be different elements and may be each independently one or more elements of Al, B, Ba, Ca, Ce, Co, Cr, Cu, Fe, Mg, Mn, Mo, Nb, Si, Sn, Sr, Ti, V, W, Y, Zn and Zr. X may be one or more elements of F, P, and S.

In some embodiments, a nickel amount of lithium nickel-based composite oxide may greater than or equal to about 80 mol% based on 100 mol% of a total metal in the lithium nickel-based composite oxide, excluding lithium.

In some embodiments, a molar concentration of the lithium hydroxide aqueous solution may be about 0.2 M to about 0.7 M.

In some embodiments, that a weight ratio of the lithium hydroxide aqueous solution to the core particles may be about 1 to about 1.4.

In some embodiments, a weight ratio of the lithium hydroxide aqueous solution to the core particles may be about 1.1 to about 1.2.

In some embodiments, a residual lithium amount may be from about 700 ppm to about 1400 ppm on a surface of the positive electrode active material, based on 100 wt% of a total positive electrode active material.

In some embodiments, a residual lithium amount may be from about 1000 ppm to about 1200 ppm on a surface of the positive electrode active material, based on 100 wt% of a total positive electrode active material.

In some embodiments, a specific surface area of the positive electrode active material as measured by BET may be from about 0.35 m²/g to about 0.4 m²/g.

In some embodiments, the cobalt amount in the cobalt raw material may be from about 1 mol% to about 5 mol% based on a total of 100 mol% of metal, excluding lithium of the core particles and cobalt of the cobalt raw material.

In some embodiments, heat-treating the dried product with a cobalt raw material to form a coating layer on the surface of the dried product to obtain the positive electrode active material may be performed at a temperature from about 600°C to about 900°C.

A positive electrode active material according to some embodiments of the present disclosure may include core particles including a lithium nickel-based composite oxide and may include coating layers disposed on surfaces of the core particles. A BET specific surface area of the positive electrode active material may be from about 0.35 m²/g to about 0.4 m²/g. A residual lithium amount on a surface of the positive electrode active material may be less than or equal to about 2000 ppm based on a total 100 wt% of the positive electrode active material. A cobalt content in the positive electrode active material may be 10 at% to 40 at% based on 100 at% of total metals excluding lithium.

In some embodiments, the residual lithium amount on the surface of the positive electrode active material may be from about 700 ppm to about 1400 ppm based on a total 100 wt% of the positive electrode active material.

In some embodiments, a cobalt amount of the coating layers may be from about 1 mol% to about 5 mol% based on a 100 mol% of total metal excluding lithium in the positive electrode active material.

In some embodiments, a cobalt amount in the positive electrode active material may be from about 10 at% to about 35 at% based on 100 at% of total metals in the positive electrode active material excluding lithium.

In some embodiments, a thickness of coating layers may be from about 10 nm to about 3 µm.

A rechargeable lithium battery according to some embodiments of the present disclosure may include a positive electrode including a positive electrode active material as described above, a negative electrode, and an electrolyte.

A positive electrode active material and a rechargeable lithium battery using a method of preparing a positive electrode active material according to some embodiments of the present disclosure may exhibit high initial charge/discharge capacity and high efficiency even under high-voltage driving conditions and may exhibit long-cycle-life characteristics under high-voltage and high-temperature conditions.

### BRIEF DESCRIPTION OF THE DRAWINGS

FIG.1 is a view of a cylindrical rechargeable lithium battery.
FIG. 2 is a cross-sectional view of a prismatic rechargeable lithium battery.
FIGS. 3 and 4 are schematic exploded perspective views of a pouch-type rechargeable lithium battery.

### DETAILED DESCRIPTION

Hereinafter, specific embodiments will be described in detail so that those of ordinary skill in the art can easily implement them. However, this disclosure may be embodied in many different forms and is not limited to the embodiments set forth herein.

The terminology used herein is used to describe embodiments and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

It should be understood that terms such as "comprises," "includes," or "have" are intended to designate the presence of an embodied feature, number, step, element, or a combination thereof, but these terms do not preclude the possibility of the presence or addition of one or more other features, number, step, element, or a combination thereof.

**In** the drawings, the thickness of layers, films, panels, regions, etc., may be exaggerated for clarity, and like reference numerals designate like elements throughout the specification. It will be understood that when an element such as a layer, film, region, or substrate is referred to as being "on" another element, the element can be directly on the other element, or intervening elements may also be present. In contrast, when an element is referred to as being "directly on" another element, there are no intervening elements present.

"Layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. As used herein, when a definition is not otherwise provided, the average particle diameter may mean the diameter D₅₀ of particles having a cumulative volume of 50 volume% in the particle size distribution. As used herein, when a definition is not otherwise provided, the average particle diameter means a diameter D₅₀ of particles having a cumulative volume of 50 volume% in the particle size distribution that is obtained by measuring the size (diameter or major axis length) of about 20 particles at random in a scanning electron microscope image.

"Or" is not to be construed as an exclusive meaning, for example, "A or B" is construed to include A, B, or A+B.

"Metal" is interpreted as a concept including ordinary metals, transition metals and metalloids (semi-metals). Within the framework of the present application, the term 'metalloid (semi metal)' means a chemical element selected from the group consisting of B, Si, As, Te, and At. The heavier homologues of each of these metalloids (semi metals) hence represent metals. Likewise, the elements of groups 3-12 of the periodic table represent metals and the elements groups 1 and 2 excluding H (but including Be) are regarded as representing metals.

### Method of Preparing Positive Electrode Active Material

In some embodiments, a method of preparing a positive electrode active material includes: (i) preparing core particles including a lithium nickel-based composite oxide; (ii) mixing the core particles with a lithium hydroxide aqueous solution having a molar concentration of about 0.1 M to about 2.0 M, washing the core particles, and drying the core particles to prepare a dried product; and (iii) mixing and heat-treating the dried product with a cobalt raw material to form a coating layer on the surface of the dried product to obtain a positive electrode active material.

In preparing the core particles including a lithium nickel-based composite oxide, because a first heat treatment is performed, which brings about a problem of high residual lithium, a washing process should be necessarily performed after the first heat treatment. When the washing process is performed by using pure water, the pure water may excellently remove the residual lithium but excessively remove lithium on the positive electrode active material surface or damage the positive electrode active material surface, which may cause a problem of deteriorating battery performance. In addition, if the washing process is minimized, unreacted lithium compounds may remain after a secondary heat treatment and, thus, cause oxidization of an electrolyte due to side reactions with the electrolyte, dissolution of the positive electrode active material, and the like, resulting in problems such as deterioration of battery performance and problems preventing long-term use.

Accordingly, the method of preparing a positive electrode active material according to some embodiments uses the lithium hydroxide aqueous solution in the washing process to prevent the surface damage of the positive electrode active material and desorption of lithium ions and to control the residual lithium below a predetermined level. Accordingly, the present disclosure is to provide a positive electrode active material improving initial capacity and cycle-life characteristics due to preventing the surface deterioration and satisfying high-temperature stability characteristics due to controlling the residual lithium. In addition, when the dried product obtained through the washing process is dry-coated with cobalt, because the residual lithium on the dried product surface may be used to generate a LiCoO₂ compound, the methods herein may achieve superior electrochemical performance by using a relatively smaller amount of lithium than a method of dry-coating cobalt after washing a product with distilled water not containing hydroxide lithium or a method of wet-coating the cobalt after washing the product with the lithium hydroxide aqueous solution.

In the method of preparing a positive electrode active material according to some embodiments, the preparing of core particles including a lithium nickel-based composite oxide may include mixing a nickel-based composite hydroxide and a lithium raw material and performing a first heat treatment. The nickel-based composite hydroxide may be a precursor of core particles.

The nickel-based composite hydroxide may be represented by, for example, Chemical Formula 1.

[Chemical Formula 1] Niₓ₁M¹_{y1}M²_{z1}(OH)₂.

In Chemical Formula 1, 0.3≤x1≤1, 0≤y1≤0.7, 0≤z1≤0.7, and 0.9≤x1+y1+z1≤1.1. Further, M¹ and M² may be different elements and may each independently be one or more elements of Al, B, Ba, Ca, Ce, Co, Cr, Cu, Fe, Mg, Mn, Mo, Nb, Si, Sn, Sr, Ti, V, W, Y, Zn, and Zr.

In further embodiments of Chemical Formula 1, 0.6≤x1≤1, 0≤y1≤0.4 and 0≤z1≤0.4, or 0.8≤x1≤1, 0≤y1≤0.2 and 0≤z1≤0.2, or 0.9≤x1<1, 0<y1≤0.1 and 0≤z1≤0.1.

A molar ratio of the metal of the nickel-based composite hydroxide and the lithium of the lithium raw material may be from about 1:0.9 to about 1:1.8, for example, from about 1:0.9 to about 1:1.5 or from about 1:0.9 to about 1:1.2.

The first heat treatment may be performed in an oxygen atmosphere, for example, at a temperature range from about 750°C to about 950°C, from about 780°C to about 900°C, or from about 810°C to about 890°C and may be performed from about 2 hours to about 20 hours or from about 4 hours to about 12 hours.

A lithium nickel-based composite oxide may be obtained through the first heat treatment. In the obtained lithium nickel-based composite oxide, the nickel amount based on 100 mol% of the total metal excluding lithium may be greater than or equal to about 80 mol%, greater than or equal to about 85 mol%, greater than or equal to about 90 mol%, greater than or equal to about 91 mol%, or greater than or equal to about 94 mol% and less than or equal to about 99 mol%. When the nickel amount satisfies the above ranges, high capacity and high energy density may be achieved, and structural stability may be improved.

The lithium nickel-based composite oxide may be represented by, for example, Chemical Formula 2.

[Chemical Formula 2] Liₐ₂Niₓ₂M³_{y2}M⁴_{z2}O_{2-b2}X_{b2}.

In Chemical Formula 2, 0.9≤a2≤1.8, 0.3≤x2≤1, 0≤y2≤0.7, 0≤z2≤0.7, 0.9≤x2+y2+z2≤1.1 and 0≤b2≤0.1. Further, M³ and M⁴ may be different elements and may each independently be one or more elements of Al, B, Ba, Ca, Ce, Co, Cr, Cu, Fe, Mg, Mn, Mo, Nb, Si, Sn, Sr, Ti, V, W, Y, Zn, and Zr. Even further, X may be one or more elements of F, P, and S.

In further embodiments of Chemical Formula 2, 0.6≤x2≤1, 0≤y2≤0.4, and 0≤z2≤0.4; 0.8≤x2≤1, 0≤y2≤0.2, and 0≤z2≤0.2; or 0.9≤x2<1, 0<y2≤0.1 and 0≤z2≤0.1.

The core particles including the lithium nickel-based composite oxide may be in a form of secondary particles in which a plurality of primary particles is agglomerated, in a form of single particles, or in a form of a combination thereof. The secondary particles and single particles may be spherical, ellipsoidal, polyhedral, or irregular in shape, and primary particles constituting the secondary particles may be spherical, ellipsoidal, plate-shaped, or a combination thereof. An average particle diameter D₅₀ of the core particles may be from about 10 µm to about 25 µm, for example, from about 11 µm to about 20 µm or from about 12 µm to about 18 µm. The average particle diameter D₅₀ of the secondary particles among the core particles may be from about 10 µm to about 25 µm, or from about 12 µm to about 18 µm, and the average particle diameter D₅₀ of the single particles may be from about 1 µm to about 8 µm or from about 2 µm to about 6 µm. The average particle diameter D₅₀ may be obtained by selecting 20 random particles from a scanning electron microscope image of the positive electrode active material, measuring the size (diameter or length of the longest axis) to obtain a particle size distribution, and taking the diameter of particles having a cumulative volume of 50 volume% from the particle size distribution as the average particle diameter.

The core particles may include both the secondary particles and the single particles, in which case the secondary particles and the single particles may be mixed in a weight ratio from about 20:80 to about 95:5. When the core particles include both the secondary particles and the single particles, the energy density may be increased and cycle-life characteristics may be improved.

The core particles may include large particles having an average particle diameter D₅₀ from about 9 µm to about 20 µm, small particles having an average particle diameter D₅₀ from about 1 µm to about 8 µm, or a combination thereof. The large particles may be in a form of secondary particles in which a plurality of primary particles are agglomerated, and the small particles may be in a form of secondary particles, single particles, or a mixture thereof. The core particles may include both large particles and small particles, and, further, the large particles and small particles may be mixed in a weight ratio from about 20:80 to about 95:5. When the core particles include both large and small particles, capacity, energy density, and cycle-life characteristics of the rechargeable lithium battery may be improved.

In the washing of the core particles by mixing the lithium hydroxide aqueous solution and the core particles according to some embodiments, the molar concentration of the lithium hydroxide aqueous solution is from about 0.1 M to about 2.0 M, for example, from about 0.1 M to about 1.0 M, from about 0.2 M to about 1.0 M, from about 0.1 M to about 0.7 M, or from about 0.2 M to about 0.7 M.

In addition, in the washing of the core particles by mixing the lithium hydroxide aqueous solution and the core particles according to some embodiments, the core particles may be washed by mixing a ratio (washing solution ratio) of the weight of the lithium hydroxide aqueous solution to the weight of the core particles in a range from about 1 to about 1.4, for example, from about 1 to about 1.2, from about 1.1 to about 1.4, or from about 1.1 to about 1.2.

Additionally, the washing of the core particles by mixing the core particles and the lithium hydroxide aqueous solution may be performed from about 1 minute to about 30 minutes, for example, from about 1 minute to about 10 minutes.

In the preparing of core particles including the lithium nickel-based composite oxide through a washing process, lithium remaining after the first heat treatment may be removed. When the conditions such as the concentration of the lithium hydroxide aqueous solution, a ratio of the weight of the lithium hydroxide aqueous solution to the weight of the core particles, and/or the washing time are satisfied, residual lithium on the surface of the core particles including the lithium nickel-based composite oxide may be effectively removed, while at the same time suppressing the problem of lithium inside the core particles being eluted and reducing the capacity.

The process of drying the core particles can be understood as a process of removing the solvent. Drying may be performed, for example, at 40°C to 240°C, 100°C to 220°C, or 150°C to 200°C, and may be carried out under vacuum, thereby enabling the obtainment of a well-dried product.

The high-nickel-based positive electrode active material including the lithium nickel-based composite oxide and including nickel in an amount of greater than or equal to about 80 mol% based on the total metal, excluding lithium, is significantly different from oxides of other compositions, for example, mid-nickel-based or low-nickel-based positive electrode active materials having a relatively low nickel amount such as lithium nickel-cobalt-manganese-based composite oxides, lithium nickel-cobalt-aluminum-based composite oxides, or cobalt-based positive electrode active materials containing lithium cobalt-based oxides, in that the amount of residual lithium on the particle surface and various surface characteristics are different, making it impossible to form a good coating layer in the form of a uniform film using an existing coating method. In some embodiments, the particle surface of a lithium nickel-based composite oxide may be very uniformly coated with cobalt.

**In** some embodiments, the dried product and the cobalt raw material may be mixed and heat-treated to form a coating layer on the surface of the dried product, thereby preparing a positive electrode active material. In some embodiments, forming the coating layer may mean a dry coating method. By dry mixing the dried product particles and cobalt raw material without using a solvent and heat treating them, a positive electrode active material having a cobalt coating layer on the surface of the dried product may be obtained. When cobalt is applied as a dry coating after a washing process according to some embodiments, superior electrochemical performance can be achieved with less raw materials and at lower cost compared to when coating is performed as a wet coating.

Based on a total of 100 mol% of the metal excluding lithium in the core particles and cobalt of the cobalt raw material, the cobalt amount may be designed to be from about 1 mol% to about 5 mol%, for example, from about 2 mol% to about 4 mol%, from about 2.2 mol% to about 3.8 mol%, from about 2.4 mol% to about 3.6 mol%, from about 2.6 mol% to about 3.4 mol%, or from about 2.8 mol% to about 3.2 mol%. By designing the cobalt amount within the above ranges, a coating layer having a uniform thickness with a thin thickness of several to several hundred nanometers may be formed, thereby reducing the amount of gas generated from a rechargeable lithium battery under high-voltage or high-temperature operating conditions and improving high-capacity and long cycle-life characteristics. When cobalt is dry coated on a dried product obtained through the washing process, a LiCoO₂ compound may be generated by utilizing lithium remaining on the surface of the dried product, and this may realize superior electrochemical performance with a smaller amount of lithium compared to dry coating after washing using pure water or wet coating of cobalt after washing with a lithium hydroxide aqueous solution.

The cobalt raw material may include, for example, cobalt hydroxide, cobalt oxide, cobalt sulfate, cobalt nitrate, cobalt peroxide, or a combination thereof.

In the mixing of the dried product and the cobalt raw material, a lithium raw material may be mixed together, and in this case, lithium may be eluted during the washing process may be supplemented, thereby improving the capacity characteristics and cycle-life characteristics of the positive electrode active material. The lithium amount of the lithium raw material may be from about 50 parts by mole to about 400 parts by mole or from about 100 parts by mole to about 250 parts by mole, based on 100 parts by mole of cobalt of the cobalt raw material.

In the forming of the coating layer, the heat treatment may be performed in an oxygen atmosphere and may be performed at a temperature range from about 600°C to about 900°C, for example, from about 700°C to about 800°C, and may be performed from about 5 hours to about 10 hours. When the heat treatment conditions are satisfied, a thin and uniform cobalt coating layer may be formed, and, accordingly, a positive electrode active material having a low residual lithium amount, an appropriate specific surface area range, excellent charge/discharge capacity and efficiency characteristics, and improved cycle-life characteristics may be achieved.

### Positive Electrode Active Material

In some embodiments, a positive electrode active material prepared according to the method of preparing the positive electrode active material is provided. A method is proposed to maintain a stable structure even at high voltage, implement high capacity and long cycle-life characteristics, and improve high-temperature storage characteristics for the rechargeable lithium battery by introducing a coating layer containing a specific cobalt amount on the surface of core particles including lithium nickel-based composite oxide.

### Core Particles

The core particles include a lithium nickel-based composite oxide, and the lithium nickel-based composite oxide may be represented by Chemical Formula 2.

In the lithium nickel-based composite oxide, a nickel amount based on 100 mol% of the total metal excluding lithium may be greater than or equal to about 80 mol%, greater than or equal to about 85 mol%, greater than or equal to about 90 mol%, greater than or equal to about 91 mol%, or greater than or equal to about 94 mol% and less than or equal to about 99 mol%. When the nickel amount satisfies the above ranges, high capacity may be achieved, and structural stability may be improved.

The core particles including the lithium nickel-based composite oxide may be in a form of secondary particles in which a plurality of primary particles is agglomerated, single particles, or a combination thereof. The secondary particles and single particles may be spherical, ellipsoidal, polyhedral, or irregular in shape, and primary particles constituting the secondary particles may be spherical, ellipsoidal, plate-shaped, or a combination thereof. An average particle diameter D₅₀ of the core particles may be from about 10 µm to about 25 µm, for example, from about 11 µm to about 20 µm or from about 12 µm to about 18 µm. As used herein, when a definition is not otherwise provided, the average particle diameter D₅₀ means a diameter of particles having a cumulative volume of 50 volume% in the particle size distribution that is obtained by measuring the size (diameter or major axis length) of about 20 particles at random in a scanning electron microscope image for positive electrode active materials. If the core particles have an average particle diameter within the ranges, high capacity and long cycle-life characteristics may be achieved, and, in addition, it may be advantageous to form the coating layer according to some embodiments.

The details of the core particles are the same as described above and so will not be repeatedly described below.

The core particles, which may be easily chemically attacked by components in an electrolyte when the battery is operated under high-voltage or high-temperature conditions, may frequently cause side reactions with the electrolyte and thereby generate a large amount of gas, resultantly causing problems of deteriorating battery cycle-life and safety, but these problems may be solved by introducing the coating layer according to some embodiments described above.

### Coating Layer

The positive electrode active material according to some embodiments includes a coating layer disposed on the surface of the core particles and containing cobalt.

Based on a 100 mol% of total metal excluding lithium in the positive electrode active material, the cobalt amount of the coating layer may be from about 1 mol% to about 5 mol%, for example, from about 2 mol% to about 4 mol%, from about 2.2 mol% to about 3.8 mol%, from about 2.4 mol% to about 3.6 mol%, from about 2.6 mol% to about 3.4 mol%, or from about 2.8 mol% to about 3.2 mol%. If the cobalt amount of the coating layer is within the above ranges, side reactions of the positive electrode active material with an electrolyte solution may be effectively prevented, and structural stability of the positive electrode active material may be improved, simultaneously improving charge/discharge capacity, efficiency, and cycle-life characteristics of a rechargeable lithium battery including the same.

In addition, the cobalt amount in the positive electrode active material may be from about 10 at% to about 40 at%, for example, from about 10 at% to about 35 at% based on 100 at% of total metals excluding lithium, which is measured through scanning electron microscope-energy dispersive spectroscopy (SEM-EDS) for the positive electrode active material. SEM-EDS may be analyzed at an acceleration voltage of about 3 kV by using FEI Titan 80-300 made by Philips. If the cobalt amount of the coating layer is within the above ranges, the side reactions of the positive electrode active material and the electrolyte solution may be effectively prevented, and structural stability of the positive electrode active material may be improved, simultaneously improving charge/discharge capacity, efficiency, and cycle-life characteristics of a rechargeable lithium battery including the positive electrode active material.

In some embodiments, on positive electrode active material surface, a residual lithium amount may be less than or equal to about 2000 ppm, for example from about 700 ppm to about 1400 ppm, from about 800 ppm to about 1400 ppm, from about 800 ppm to about 1300 ppm, from about 900 ppm to about 1300 ppm, from about 1000 ppm to about 1300 ppm, or from about 1000 ppm to about 1200 ppm based on a total 100 wt% of the positive electrode active material. The residual lithium amount on the positive electrode active material surface may be measured by adding about 10 g of the positive electrode active material to about 100 ml of distilled water, stirring the mixture at about 300 rpm for about 30 minutes, and then measuring pH changes, while adding HCl to the mixture. Because the unreacted residual lithium on the positive electrode active material surface may exist in the form of Li₂CO₃, LiOH, and the like, CO₃²⁻, OH⁻ ions, etc., may react with H⁺ of HCl, reaching titration. An amount of the unreacted residual lithium may be measured by measuring an amount of the added HCl solution. That is, the residual amount of lithium on the surface of the positive electrode active material is determined by measuring the pH change when a sample of the positive electrode active material is stirred in distilled water for 30 minutes.

**In** addition, the positive electrode active material on which the coating layer is formed has a specific surface area from about 0.35 m²/g to about 0.4 m²/g, for example, from about 0.36 m²/g to about 0.39 m²/g, from about 0.35 m²/g to about 0.39 m²/g, from about 0.35 m²/g to about 0.38 m²/g, or from about 0.36 m²/g to about 0.38 m²/g, when measured with BET. About 2 g of a positive electrode active material sample is heated at about 300°C under a nitrogen atmosphere for about 1 hour in a preprocessor, additionally pre-treated at about 300°C for about 15 minutes in a specific surface area measuring device, cooled to a temperature of liquid nitrogen, and then saturated by adsorption with gas of about 30% of nitrogen and about 70% of He. Subsequently, a heat treatment to room temperature is performed to measure an amount of the desorbed gas, and the obtained result is used to measure the specific surface area in a conventional BET method. If the residual lithium amount on the positive electrode active material surface and the specific surface area measured through BET are respectively within the ranges, the residual lithium may be controlled to a predetermined level, thereby preparing a positive electrode active material improving initial capacity and cycle-life characteristics of the rechargeable lithium battery due to preventing the surface deterioration of the positive electrode active material and satisfying high-temperature stability characteristics due to controlling the residual lithium.

The coating layer according to some embodiments may be in the form of a film that continuously surrounds the surface of the core particle, or it may be in the form of a shell that surrounds the entire surface of the core particle. Alternatively, the coating layer may be in a form of an island. According to some embodiments, the coating layer may be formed with a very thin and uniform thickness, whereby the positive electrode active material has improved structural stability without increasing resistance or decreasing capacity of the rechargeable lithium battery, effectively suppressing side reactions with the electrolyte, reducing gas generation under high voltage and high temperature conditions, and implementing long cycle-life characteristics of the rechargeable lithium battery.

A thickness of the coating layer according to some embodiments may be from about 10 nm to about 3 µm, for example, from about 100 nm to about 3 µm, from about 500 nm to about 2 µm, or from about 800 nm to about 1.5 µm. If the coating layer satisfies the above thickness ranges, the structural stability of the positive electrode active material may be improved without increasing resistance or reducing capacity due to the coating, and side reactions with the electrolyte may be effectively suppressed. The thickness of the coating layer may be measured, for example, by SEM, TEM, TOF-SIMS, XPS, or EDS analysis, and for example, by measuring EDS line profile analysis of a cross-section of 20 positive electrode active material particles and calculating the average value..

The coating layer may further contain nickel, aluminum, or a combination thereof in addition to cobalt. The nickel and aluminum may be contained in the core particles and introduced during the coating layer formation process, and their amounts are not particularly limited. According to some embodiments, a coating layer essentially contains cobalt and optionally contains nickel and aluminum and is formed to have a thin and uniform thickness, thereby improving the high-voltage characteristics of the positive electrode active material and enhancing cycle-life characteristics of the rechargeable lithium battery.

The obtained positive electrode active material may include core particles including a lithium nickel-based composite oxide, and a coating layer disposed on the surface of the core particles and including cobalt oxide, lithium-cobalt oxide, or a combination thereof.

### Positive Electrode

In some embodiments, a positive electrode includes a positive electrode current collector and a positive electrode active material layer on the current collector, wherein the positive electrode active material layer includes the aforementioned positive electrode active material. The positive electrode active material layer may further include other types of positive electrode active materials in addition to the aforementioned positive electrode active materials. Additionally, the positive electrode active material layer may optionally further include a binder, a conductive material, or a combination thereof.

### Binder

The binder improves binding properties of positive electrode active material particles with one another and with a current collector. Examples of the binder include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

### Conductive Material

The conductive material is included to provide electrode conductivity, and any electrically conductive material may be used as a conductive material unless the electrically conductive material causes an undesirable chemical change. Examples of the conductive material may include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

Each amount of the binder and the conductive material may be from about 0.5 wt% to about 5 wt% based on 100 wt% of the positive electrode active material layer.

The current collector may include Al thin film, but the current collector is not limited thereto.

### Rechargeable Lithium Battery

Some embodiments provide a rechargeable lithium battery including the aforementioned positive electrode, a negative electrode, and an electrolyte. Further, the rechargeable lithium battery may include a positive electrode, a negative electrode, a separator between the positive electrode and the negative electrode, and an electrolyte solution.

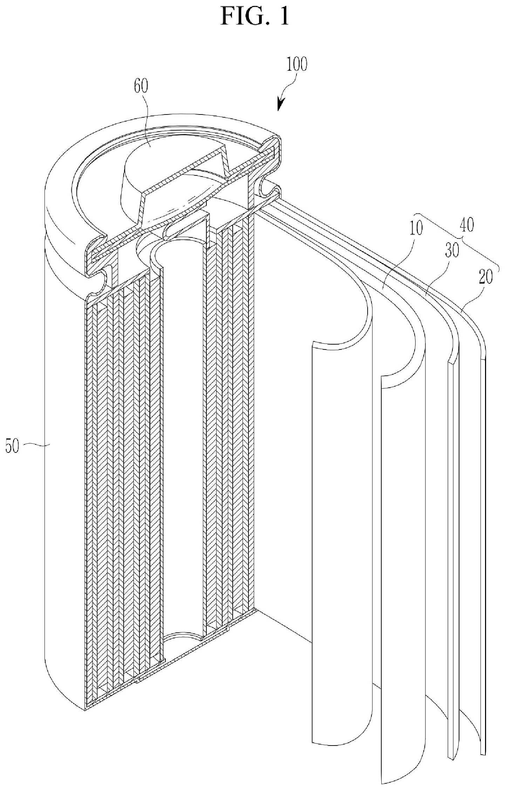

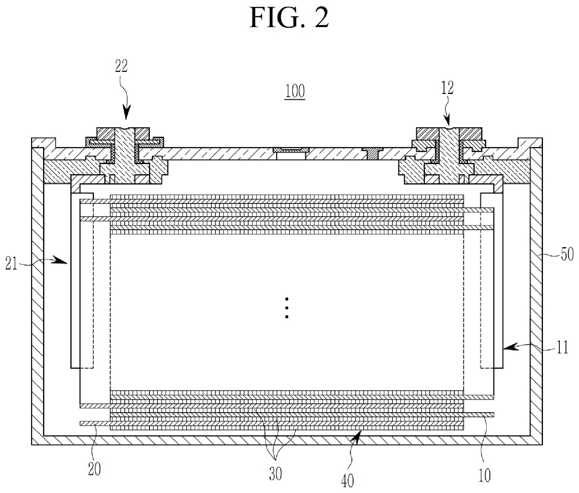

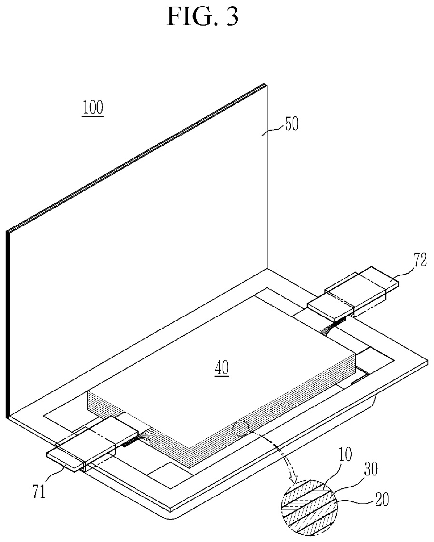

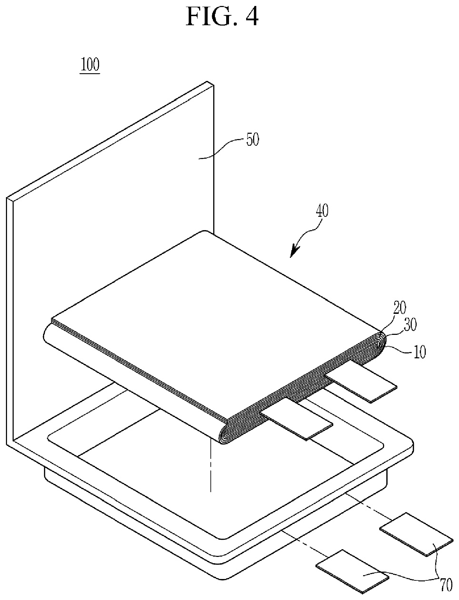

The rechargeable lithium battery may be cylindrical, prismatic, pouch, coin, etc. depending on the shape of the rechargeable lithium battery. FIGS. 1 to 4 are schematic views showing the rechargeable lithium batteries according to some embodiments, where FIG. 1 shows a cylindrical battery, FIG. 2 shows a prismatic battery, and FIGS. 3 and 4 each show a pouch-shaped battery. The rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70, that is, a positive electrode tab 71 and a negative electrode tab 72, each serving as an electrical path for inducing the current formed in the electrode assembly 40 to the outside.

### Negative Electrode

The negative electrode may include a current collector and a negative electrode active material layer on the current collector, and the negative electrode active material layer may include a negative electrode active material and may further include a binder, a conductive material, or a combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example, crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material.

The Si-based negative electrode active material may include silicon, a silicon-carbon composite, SiOₓ (0<x≤2), a Si-Q alloy (wherein Q is an element selected from an alkali metal, an alkaline-earth metal, a Group 13 element, a Group 14 element [excluding Si], a Group 15 element, a Group 16 element, a transition metal, a rare earth element, and a combination thereof, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be Sn, SnO₂, a Sn alloy, or a combination thereof.

The silicon-carbon composite may be a composite of silicon and amorphous carbon. An average particle diameter D₅₀ of the silicon-carbon composite particles may be, for example, from about 0.5 µm to about 20 µm. According to some embodiments, the silicon-carbon composite may be in the form of silicon particles and amorphous carbon coated on the surface of the silicon particles. The silicon-carbon composite may include a secondary particle (core) in which silicon primary particles are assembled and an amorphous carbon coating layer (shell) on the surface of the secondary particle. The amorphous carbon may also be present between the silicon primary particles. Further, the silicon primary particles may be coated with amorphous carbon. The secondary particles may exist dispersed in an amorphous carbon matrix.

The silicon-carbon composite may further include crystalline carbon. The silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

When the silicon-carbon composite includes silicon and amorphous carbon, an amount of silicon may be from about 10 wt% to about 50 wt% and an amount of amorphous carbon may be from about 50 wt% to about 90 wt% based on 100 wt% of the silicon-carbon composite. In addition, when the composite includes silicon, amorphous carbon, and crystalline carbon, an amount of silicon may be from about 10 wt% to about 50 wt%, an amount of crystalline carbon may be from about 10 wt% to about 70 wt%, and an amount of amorphous carbon may be from about 20 wt% to about 40 wt% based on 100 wt% of the silicon-carbon composite.

A thickness of the amorphous carbon coating layer may be from about 5 nm to about 100 nm. An average particle diameter D₅₀ of the silicon particles (primary particles) may be from about 10 nm to about 1 µm or from about 10 nm to about 200 nm. The silicon particles may exist as silicon alone, in the form of a silicon alloy, or in an oxidized form. The oxidized form of silicon may be represented by SiOₓ (0<x≤2). The atomic ratio of Si:O, which indicates a degree of oxidation, may be from about 99:1 to about 33:67. As used herein, when a definition is not otherwise provided, an average particle diameter D₅₀ indicates a diameter of particle where a cumulative volume is about 50 volume% in a particle size distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, a mixing ratio may be a weight ratio from about 1:99 to about 90:10.

### Binder

The binder serves to adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity, and any electrically conductive material may be used unless it causes a chemical change. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

An amount of the negative electrode active material may be from about 95 wt% to about 99.5 wt% based on 100 wt% of the negative electrode active material layer, and an amount of the binder may be from about 0.5 wt% to about 5 wt% based on 100 wt% of the negative electrode active material layer. The negative electrode active material layer may include from about 90 wt% to about 99 wt% of the negative electrode active material, from about 0.5 wt% to about 5 wt% of the binder, and from about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof and may be in the form of a foil, sheet, or foam. A thickness of the negative electrode current collector may be, for example, from about 1 µm to about 20 µm, from about 5 µm to about 15 µm, or from about 7 µm to about 10 µm.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, t-butyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, and may include a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent can be used alone or in a mixture of two or more types, and when two or more types are used in a mixture, a mixing ratio can be appropriately adjusted according to a desired battery performance.

When using a carbonate-based solvent, a cyclic carbonate and a chain carbonate may be mixed and used, and the cyclic carbonate and the chain carbonate may be mixed in a volume ratio from about 1:1 to about 1:9.

The non-aqueous organic solvent may further include an aromatic hydrocarbon-based organic solvent. A carbonate-based solvent and an aromatic hydrocarbon-based organic solvent may be mixed and used in a volume ratio from about 1:1 to about 30:1.

The electrolyte solution may further include vinylethylene carbonate, vinylene carbonate, or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, LiSbF₆, LiAsF₆, LiClO₄, LiAlO₂, LiAlCl₄, LiPO₂F₂, LiCl, LiI, LiN(SO₂C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte solution has appropriate ionic conductivity and viscosity. Thus, excellent performance can be achieved, and lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, TEFLON^{®}, and polytetrafluoroethylene, or a copolymer or mixture of two or more thereof. The porous substrate may include glass fibers, or may comprise a composite membrane of polymer and glass fibers.

The porous substrate may have a thickness from about 1 µm to about 40 µm, for example, from about 1 µm to about 30 µm, from about 1 µm to about 20 µm, from about 5 µm to about 15 µm, or from about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the inorganic material is not limited thereto. An average particle diameter D₅₀ of the inorganic particles may be from about 1 nm to about 2000 nm, for example, from about 100 nm to about 1000 nm or from about 100 nm to about 700 nm.

The organic material and the inorganic material may be mixed in one coating layer, or a coating layer including an organic material and a coating layer including an inorganic material may be stacked.

A thickness of the coating layer may be from about 0.5 µm to about 20 µm, for example, from about 1 µm to about 10 µm or from about 1 µm to about 5 µm.

Examples and comparative examples of the present disclosure are described below. However, the present disclosure is not limited to the following examples and comparative examples.

### Example 1

### 1. Preparation of Positive Electrode Active Material

Ni_{0.91}Co_{0.08}Al_{0.01}(OH)₂ and LiOH were mixed in a molar ratio of 1:1 and then heat-treated at 740°C for 10 hours in an oxygen atmosphere to prepare core particles containing a lithium nickel-based composite oxide (LiNi_{0.91}Co_{0.08}Al_{0.01}O₂) in the form of secondary particles having an average particle diameter D₅₀ of about 15 µm.

100 g of the core particles was added to 100 g of a lithium hydroxide aqueous solution having a molar concentration of 0.5 M and then stirred for 30 minutes to wash the core particles. The lithium hydroxide aqueous solution to the core particles containing a lithium nickel-based composite oxide had a weight ratio (i.e., a washing solution ratio) of 1.0.

After removing the washing solution, the washed core particles were added to a reactor, which was heated to 180°C to dry the particles for 10 hours, thus, preparing a dried product.

Subsequently, the dried product was dry-mixed at 25°C at 5000 rpm for 1 minute with a cobalt hydroxide (Co(OH)₂) and LiOH and then was secondarily heat-treated at 700°C for 7 hours under an oxygen atmosphere to prepare a positive electrode active material having a cobalt coating layer. The cobalt hydroxide was designed to have a cobalt amount of 3.0 mol% based on 100 mol% of total metals excluding lithium in the positive electrode active material, while LiOH was designed to have a lithium amount of 6.0 mol% based on 100 mol% of the total metals excluding lithium.

### 2. Manufacturing of Rechargeable Lithium Battery Cell

98.5 wt% of the positive electrode active material, 1.0 wt% of a polyvinylidene fluoride binder, and 0.5 wt% of a carbon nanotube conductive material were mixed in an N-methyl-2-pyrrolidone (NMP) solvent to prepare a positive electrode active material layer slurry, and the slurry was coated on an aluminum foil current collector and then dried and compressed to manufacture a positive electrode.

The positive electrode was used with a lithium metal counter electrode and an electrolyte solution to manufacture a half-cell in a conventional method. The electrolyte solution was prepared by mixing ethylene carbonate and dimethyl carbonate in a volume ratio of 3:7 and by dissolving 1 M LiPF₆ in the mixed solvent, and a polytetrafluoroethylene separator was used.

### Example 2

A positive electrode active material and a rechargeable lithium battery cell were manufactured substantially in the same manner as in Example 1, except that 100 g of the core particles was added to 110 g of the lithium hydroxide aqueous solution for the washing to adjust the washing solution ratio to 1.1 in preparing the positive electrode active material.

### Example 3

A positive electrode active material and a rechargeable lithium battery cell were manufactured substantially in the same manner as in Example 1, except that 100 g of the core particles was added to 120 g of the lithium hydroxide aqueous solution for the washing to adjust the washing solution ratio to 1.2 in preparing the positive electrode active material.

### Example 4

A positive electrode active material and a rechargeable lithium battery cell were manufactured substantially in the same manner as in Example 1, except that 100 g of the core particles was added to 140 g of the lithium hydroxide aqueous solution for the washing to adjust the washing solution ratio to 1.4 in preparing the positive electrode active material.

### Example 5

A positive electrode active material and a rechargeable lithium battery cell were manufactured substantially in the same manner as in Example 3, except that the concentration of the lithium hydroxide aqueous solution was changed to 0.25 M in preparing the positive electrode active material.

### Example 6

A positive electrode active material and a rechargeable lithium battery cell were manufactured substantially in the same manner as in Example 3, except that the concentration of the lithium hydroxide aqueous solution was changed to 1.0 M in preparing the positive electrode active material.

### Comparative Example 1

A positive electrode active material and a rechargeable lithium battery cell were manufactured substantially in the same manner as in Example 1, except that the core particles were dry coated with cobalt without the washing in preparing the positive electrode active material.

### Comparative Example 2

A positive electrode active material and a rechargeable lithium battery cell were manufactured substantially in the same manner as in Example 1, except that the washing process was performed by using distilled water instead of the lithium hydroxide aqueous solution, and 100 g of the core particles was added to 80 g of the distilled water to adjust the washing solution ratio (a weight ratio of the distilled water to the core particles) to 0.8 in preparing the positive electrode active material. But the positive electrode active material and thus the rechargeable lithium battery cell were not prepared.

### Comparative Example 3

A positive electrode active material and a rechargeable lithium battery cell were manufactured substantially in the same manner as in Example 1, except that the washing process was performed by using distilled water instead of the lithium hydroxide aqueous solution, and 100 g of the core particles was added to 100 g of the distilled water to adjust the washing solution ratio (a weight ratio of the distilled water to the core particles) to 1.0 in preparing the positive electrode active material.

### Comparative Example 4

A positive electrode active material and a rechargeable lithium battery cell were manufactured substantially in the same manner as in Example 1, except that the washing process was performed by using distilled water instead of the lithium hydroxide aqueous solution, and 100 g of the core particles was added to 120 g of the distilled water to adjust the washing solution ratio (a weight ratio of the distilled water to the core particles) to 1.2 in preparing the positive electrode active material.

### Comparative Example 5

A positive electrode active material and a rechargeable lithium battery cell were manufactured substantially in the same manner as in Example 3, except that the concentration of the lithium hydroxide aqueous solution was adjusted to 3.0 M.

### Comparative Example 6

A positive electrode active material and a rechargeable lithium battery cell were manufactured substantially in the same manner as in Comparative Example 4, except that the cobalt coating layer was not formed in preparing the positive electrode active material.

### Comparative Example 7

A positive electrode active material was prepared substantially in the same manner as in Example 1, except that the cobalt was wet coated in preparing the positive electrode active material. Specifically, 240 g of distilled water and 80 g of cobalt sulfate were added to a 1 L reactor and then stirred at about 250 rpm for about 5 minutes to dissolve the salt, thereby preparing a coating solution. In the coating solution, the salt was completely dissolved and became colorless and transparent. While continuously stirring at about 250 rpm, 300 g of the dried product according to Example 1 was added to the coating solution for 1 minute and then stirred at 450 rpm for 30 minutes. While stirring, 25 g of a total of sodium hydroxide was added to the coating solution. The cobalt sulfate was designed to have a cobalt amount of 3.0 mol% based on 100 mol% of total metals excluding lithium in the positive electrode active material.

The mixed solution was treated to remove the solvent by using an aspirator and a filter press and then vacuum-dried at 190°C, thereby obtaining a coated positive electrode active material.

Subsequently, a rechargeable lithium battery cell was manufactured substantially in the same manner as in Example 1.

### Comparative Example 8

A positive electrode active material and a rechargeable lithium battery cell were manufactured substantially in the same manner as in Comparative Example 7 except that the dried product of Comparative Example 3 was used instead of the dried product of Example 1 in preparing the positive electrode active material.

Methods of preparing the positive electrode active materials according to the examples and the comparative examples are briefly shown in Table 1.

### Evaluation 1: Measurement of BET Specific Surface Area

The positive electrode active materials of the examples and the comparative examples were measured with respect to BET specific surface area by using a specific surface area measuring device, HM model-1208 made by MOUNTECH Inc., in a nitrogen gas adsorption method, and the results are shown in Table 1. Specifically, about 2 g of each positive electrode active material sample was heated at 300°C for 1 hour under a nitrogen atmosphere in a preprocessor, was additionally pre-treated at 300°C for 15 minutes in a specific surface area measuring device, was cooled to a temperature of liquid nitrogen, and then was saturated by adsorption with a gas containing 30% of nitrogen and 70% of He. Subsequently, an amount of the desorbed gas by heating to room temperature was measured, and the result was used to measure a specific surface area in a conventional BET method.

### Evaluation 2: Measurement of Residual Lithium

The positive electrode active materials according to the examples and the comparative examples were measured with respect to a residual lithium amount on the surface in a HCl titration method, and the results are shown in Table 1. Specifically, 10 g of each of the positive electrode active materials was added to 100 ml of distilled water and then stirred at 300 rpm for 30 minutes to create a mixture, and then, while adding HCl to the mixture, pH changes were measured. On the positive electrode active material surface, unreacted residual lithium existed in the form of Li₂CO₃, LiOH, etc., of which CO₃²⁻, OH⁻ ions, etc. reacted with H⁺ of HCl to reach titration. An amount of the added HCl solution was measured to determine an amount of the unreacted residual lithium. In Table 1, the residual lithium amount was expressed by using ppm as a unit, which was 10⁻⁴ wt% based on 100 wt% of the positive electrode active material.

**Table 1:**

| | LiOH concentration (M) | Washing solution ratio | Coating method | BET specific surface area (m²/g) | Residual lithium (ppm) |
|---|---|---|---|---|---|
| Example 1 | 0.5 | 1.0 | dry | 0.38 | 1192 |
| Example 2 | 0.5 | 1.1 | dry | 0.36 | 1127 |
| Example 3 | 0.5 | 1.2 | dry | 0.37 | 1012 |
| Example 4 | 0.5 | 1.4 | dry | 0.37 | 957 |
| Example 5 | 0.25 | 1.2 | dry | 0.40 | 728 |
| Example 6 | 1.0 | 1.2 | dry | 0.35 | 1312 |
| Comparative Example 1 | - | - | dry | 0.33 | 2613 |
| Comparative Example 2 | - | 0.8 | dry | Not prepared | |
| Comparative Example 3 | - | 1.0 | dry | 0.42 | 731 |
| Comparative Example 4 | - | 1.2 | dry | 0.44 | 726 |
| Comparative Example 5 | 3.0 | 1.2 | dry | 0.33 | 2176 |
| Comparative Example 6 | - | 1.2 | - | 0.28 | 1313 |
| Comparative Example 7 | 0.5 | 1.0 | wet | 0.34 | 1220 |
| Comparative Example 8 | - | 1.0 | wet | 0.32 | 2500 |

### Evaluation 3: Initial Charge/Discharge Capacity and Efficiency

The rechargeable lithium battery cells of the examples and the comparative examples were charged to an upper voltage limit of 4.55 V at a constant current of 0.2 C and to 0.05 C at the constant voltage and were discharged to a cut-off voltage of 3.0 V at 0.2 C at 25°C for an initial charge and discharge. Table 2 shows an initial charge capacity and an initial discharge capacity, and a ratio of the latter to the former, calculated as efficiency.

### Evaluation 4: High-temperature Cycle-life

After the initial charge/discharge of Evaluation 3, the cells were 50 times or more repeatedly charged and discharged at 1.0 C within a voltage range of 3.0 V to 4.55 V at 45°C to calculate a ratio of 50^{th} cycle discharge capacity to the initial discharge capacity, and the results are shown in Table 2.

**Table 2:**

| | LiOH concentration (M) | Washing solution ratio | Coating method | Charge capacity (mAh/g) | Discharge capacity (mAh/g) | Efficiency (%) | Cycle-life (%) |
|---|---|---|---|---|---|---|---|
| Example 1 | 0.5 | 1.0 | dry | 242.1 | 217.0 | 89.6 | 95.4 |
| Example 2 | 0.5 | 1.1 | dry | 242.4 | 217.5 | 89.7 | 95.4 |
| Example 3 | 0.5 | 1.2 | dry | 242.8 | 217.8 | 89.7 | 95.1 |
| Example 4 | 0.5 | 1.4 | dry | 241.9 | 216.0 | 89.2 | 94.5 |
| Example 5 | 0.25 | 1.2 | dry | 242.4 | 216.4 | 89.3 | 94.9 |
| Example 6 | 1.0 | 1.2 | dry | 242.9 | 216.5 | 89.1 | 94.3 |
| Comparative Example 1 | - | - | dry | 239.4 | 217.6 | 90.9 | 90.9 |
| Comparative Example 2 | - | 0.8 | dry | Not prepared | | | |
| Comparative Example 3 | - | 1.0 | dry | 241.3 | 212.1 | 87.9 | 94.2 |
| Comparative Example 4 | - | 1.2 | dry | 242.0 | 212.0 | 87.6 | 93.2 |
| Comparative Example 5 | 3.0 | 1.2 | dry | 240.5 | 214.7 | 89.3 | 91.7 |
| Comparative Example 6 | - | 1.2 | - | 246.8 | 219.2 | 88.8 | 90.5 |
| Comparative Example 7 | 0.5 | 1.0 | wet | 243.0 | 216.9 | 89.3 | 94.5 |
| Comparative Example 8 | - | 1.0 | wet | 245.1 | 218.5 | 89.1 | 90.5 |

Referring to Table 2, the examples in which the core particles were washed by using a lithium hydroxide aqueous solution having a concentration from 0.25 M to 1.0 M to adjust a washing solution ratio to be from 1.0 to 1.5 (compared to Comparative Examples 1 to 4, which did not use the lithium hydroxide aqueous solution, Comparative Example 5, in which the core particles were washed by using a lithium hydroxide aqueous solution having a concentration of 3.0 M, Comparative Example 6, in which the cobalt coating was not performed, or Comparative Examples 7 and 8, in which the cobalt coating was performed through wet coating) were confirmed to exhibit excellent initial charge capacity, initial discharge capacity, efficiency, and improved cycle-life characteristics for the rechargeable lithium battery.

In particular, Example 1, Example 2, and Example 3 (in which the core particles were washed by using a lithium hydroxide aqueous solution having a concentration of 0.5 M to adjust the washing solution ratio to be from 1.0 to 1.2) was confirmed to exhibit the most excellent initial charge capacity, initial discharge capacity, efficiency, and cycle-life characteristics for the rechargeable lithium battery.

While some embodiments have been described above, the present disclosure is not limited to the above-described embodiments. Rather, the present disclosure is also intended to cover various modifications and equivalent arrangements to the above-described embodiments.

### <Description of Symbols>

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealer | 70: | electrode tab |
| 71: | positive electrode tab | 72: | negative electrode tab |

## Claims

1. A method of preparing a positive electrode active material, the method comprising:
(i) preparing core particles comprising a lithium nickel-based composite oxide;
(ii) mixing the core particles with a lithium hydroxide aqueous solution having a molar concentration of 0.1 M to 2.0 M;
(iii) washing the core particles;
(iv) drying the core particles to prepare a dried product; and
(v) mixing and heat-treating the dried product with a cobalt raw material to form a coating layer on a surface of the dried product to obtain the positive electrode active material.

2. The method as claimed in claim 1, wherein the lithium nickel-based composite oxide is represented by:
Liₐ₂Niₓ₂M³_{y2}M⁴_{z2}O_{2-b2}X_{b2}
wherein 0.9≤a2≤1.8, 0.3≤x2≤1, 0≤y2≤0.7, 0≤z2≤0.7, 0.9≤x2+y2+z2≤1.1, and 0≤b2≤0.1,
wherein M³ and M⁴ are different and are each independently one or more of Al, B, Ba, Ca, Ce, Co, Cr, Cu, Fe, Mg, Mn, Mo, Nb, Si, Sn, Sr, Ti, V, W, Y, Zn and Zr, and
wherein X is one or more of F, P, and S.

3. The method as claimed in claim 1 or claim 2, wherein a nickel amount of the lithium nickel-based composite oxide is greater than or equal to 80 mol% based on 100 mol% of a total metal in the lithium nickel-based composite oxide, excluding lithium.

4. The method as claimed in any one of claims 1 to 3, wherein a molar concentration of the lithium hydroxide aqueous solution is 0.2 M to 0.7 M.

5. The method as claimed in any one of claims 1 to 4, wherein a weight ratio of the lithium hydroxide aqueous solution to the core particles is 1 to 1.4,
preferably 1.1 to 1.2.

6. The method as claimed in any one of claims 1 to 5, wherein a residual lithium amount is 700 ppm to 1400 ppm on a surface of the positive electrode active material, based on 100 wt% of a total positive electrode active material,
preferably 1000 ppm to 1200 ppm.

7. The method as claimed in any one of claims 1 to 6, wherein a specific surface area of the positive electrode active material as measured by BET is 0.35 m²/g to 0.4 m²/g.

8. The method as claimed in any one of claims 1 to 7, wherein a cobalt amount in the cobalt raw material is 1 mol% to 5 mol% based on a total of 100 mol% of metal excluding lithium of the core particles and cobalt of the cobalt raw material.

9. The method as claimed in any one of claims 1 to 8, wherein heat-treating the dried product with a cobalt raw material to form a coating layer on the surface of the dried product to obtain the positive electrode active material is performed at a temperature of 600°C to 900°C.

10. A positive electrode active material comprising:
core particles comprising a lithium nickel-based composite oxide; and
coating layers disposed on surfaces of the core particles,
wherein a BET specific surface area of the positive electrode active material is 0.35 m²/g to 0.4 m²/g,
wherein a residual lithium amount on a surface of the positive electrode active material is less than or equal to 2000 ppm based on a total 100 wt% of the positive electrode active material,
wherein a cobalt content in the positive electrode active material is 10 at% to 40 at% based on 100 at% of total metals excluding lithium.

11. The positive electrode active material as claimed in claim 10, wherein the residual lithium amount on the surface of the positive electrode active material is 700 ppm to 1400 ppm based on a total 100 wt% of the positive electrode active material.

12. The positive electrode active material as claimed in claim 10 or claim 11, wherein a cobalt amount of the coating layer is 1 mol% to 5 mol% based on a 100 mol% of total metal excluding lithium in the positive electrode active material.

13. The positive electrode active material as claimed in any one of claims 10 to 12, wherein a cobalt amount in the positive electrode active material is 10 at% to 35 at% based on 100 at% of total metals in the positive electrode active material excluding lithium.

14. The positive electrode active material as claimed in any one of claims 10 to 13, wherein a thickness of each of the coating layers is 10 nm to 3 µm.

15. A rechargeable lithium battery comprising:
a positive electrode comprising a positive electrode active material as claimed in any one of claims 10 to 14;
a negative electrode; and
an electrolyte.
